(19) Europäisches Patentamt European Patent Office Office européen des brevets

(11) **EP 2 811 319 B1**

(12) **FASCICULE DE BREVET EUROPEEN**

(45) Date de publication et mention de la délivrance du brevet:
**22.06.2016 Bulletin 2016/25**

(51) Int Cl.:
*G01S 17/87* (2006.01)  *G01B 11/26* (2006.01)
*F41G 3/22* (2006.01)  *G01B 11/03* (2006.01)
*G01S 5/16* (2006.01)

(21) Numéro de dépôt: **14169668.2**

(22) Date de dépôt: **23.05.2014**

(54) **Système optique de mesure d'orientation et de position à source ponctuelle, masque central, capteur matriciel photosensible et coin de cube**

Optisches System zur Richtungs- und Positionsmessung mit Punktquelle, zentraler Maske, fotoempfindlichem Matrixsensor und Tripelspiegelreflektor

Optical system for measuring direction and position with a point source, central mask, photosensitive matrix sensor and cube corner

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2013 FR 1301305**

(43) Date de publication de la demande:
**10.12.2014 Bulletin 2014/50**

(73) Titulaire: **Thales**
**92400 Courbevoie (FR)**

(72) Inventeurs:
• **Barbier, Bruno**
**33000 BORDEAUX (FR)**
• **Potin, Laurent**
**33187 LE HAILLAN Cedex (FR)**
• **Rouzes, Siegfried**
**33185 LE HAILLAN (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 2 554 941     EP-A1- 2 554 942**
**WO-A1-2011/067341     FR-A1- 2 905 456**

**Description**

Le domaine de l'invention est celui des dispositifs optiques permettant de mesurer l'orientation d'un objet dans l'espace sans contact. Il existe divers domaines d'applications possibles mais l'application principale est la détection de posture de casque de pilote d'aéronef, permettant ainsi de projeter dans sa visière une image en superposition exacte sur le paysage extérieur ou d'asservir différents systèmes de l'appareil sur son regard. La précision recherchée dans de tels systèmes est de l'ordre du milliradian.

Il existe différentes techniques optiques permettant de faire de la mesure d'orientation sur casque. Généralement, on installe sur le casque des éléments remarquables qui sont repérés par un système optique d'émission et de réception. La position des images de ces éléments remarquables permet de déterminer par calcul la position et l'orientation du casque.

On peut utiliser, à cette fin, des coins de cube rétroréfléchissants ou rétro-réflecteurs. Il suffit de disposer les organes optiques d'émission et de réception sur un même axe. Ces systèmes à rétro-réflecteurs sont, par nature, peu sensibles à l'éclairement solaire. La demande brevet EP 2 554 941 intitulée « Système optique de mesure d'orientation de casque à coins de cube et optique d'émission télécentrique » décrit une solution de ce type.

A titre d'exemple de réalisation, ils peuvent être combinés à un dispositif fixe optoélectronique comportant une source ponctuelle associée à un ensemble comportant un ou deux capteurs matriciels sans objectif optique. Dans cette disposition, le réflecteur est équipé d'un masque appliqué sur sa face d'entrée. Ce masque comporte une partie centrale transparente et une partie périphérique opaque. Le contour du masque est en forme de parallélogramme, matérialisant ainsi l'orientation de deux directions fixes du casque. L'orientation du casque est calculée par analyse des formes du contour projetées sur le ou les capteurs. L'analyse porte sur les transitions entre les zones lumineuses et obscures du reflet reçu par le capteur.

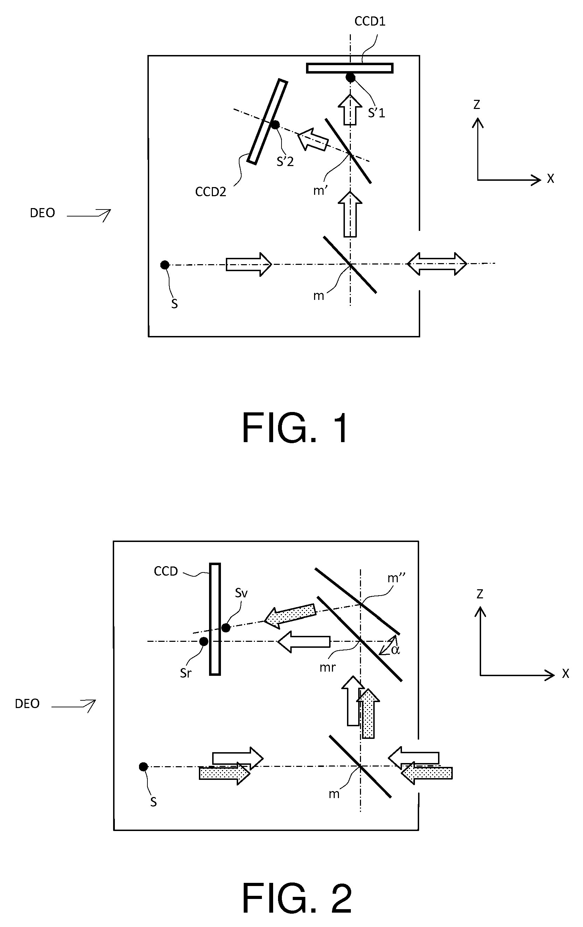

Un premier dispositif fixe optoélectronique de ce type est représenté en figure 1. La figure 1 est une vue en coupe simplifiée dans un plan (X, Z). Le dispositif comporte une source ponctuelle S, une première lame séparatrice m permettant d'assurer la séparation entre la voie d'émission et la voie de réception et une seconde lame séparatrice neutre m' permettant d'envoyer la lumière réfléchie par le coin de cube sur deux capteurs photosensibles CCD1 et CCD2 disposés à des positions différentes. Ainsi, les images de la source S donnée par les lames m et m' sont les points S'1 et S'2 sur les capteurs CCD1 et CCD2. Une variante de ce premier dispositif est représentée sur la figure 2. Dans cette variante, la seconde lame séparatrice m' est remplacée par un ensemble de deux lames mr et m". La première lame mr est dichroïque. Elle réfléchit une première gamme de longueur d'onde et transmet le reste du spectre. L'unique capteur CCD reçoit donc deux formes décalées du contour projeté, la première dans une première gamme de longueur d'onde et la seconde dans le reste du spectre. Ainsi, les images de la source S donnée par les lames m et m' sont les points Sr et Sv.

Ces dispositifs fixes optoélectroniques présentent quelques inconvénients détaillés ci-dessous :

- Le dispositif fixe optoélectronique comporte un certain nombre d'éléments optiques et deux capteurs matriciels. Il est donc volumineux et requiert une double électronique d'acquisition d'image ;
- La source lumineuse émet dans une ouverture angulaire suffisamment large pour couvrir toutes les positions possibles du réflecteur. Une très grande partie du flux lumineux est donc perdue en permanence, puisqu'elle n'atteint pas le réflecteur. Cette part de flux est, de plus, rayonnée dans l'espace environnant interne et externe de la cabine, nuisant ainsi à la furtivité du dispositif ;
- La position inconnue du sommet du réflecteur en coin de cube est déterminée soit par l'analyse de l'image projetée sur chacun des deux capteurs, soit par l'analyse de deux images colorées. L'incertitude sur la position du sommet du réflecteur d'une part et l'incertitude sur son orientation d'autre part, sont d'autant plus grandes que les deux capteurs ou les deux images sont proches l'un de l'autre en orientation et/ou en position.

L'objet du dispositif fixe optoélectronique selon l'invention est de remédier aux inconvénients précédents, en simplifiant le dispositif fixe, en améliorant le bilan photométrique de l'ensemble et en augmentant la précision de mesure.

Le principe du système de détection est le suivant. Le dispositif fixe comporte une source unique, un capteur matriciel unique et un écran, l'écran et le capteur matriciel étant positionnés à proximité de la source. Le système comporte, comme dans les dispositifs précédents, un coin de cube à masque solidaire de l'objet mobile. Le rétro reflet de la source ponctuelle fixe, produit par le réflecteur mobile en coin de cube et par son diaphragme associé est projeté sur l'unique capteur matriciel fixe positionné à proximité de la source. La partie centrale du reflet projeté contient en permanence l'ombre projetée produite par l'écran. L'analyse simple du contour du reflet et celui de l'ombre contenue fournit la position et l'orientation du réflecteur et donc de l'objet mobile.

Plusieurs architectures optiques différentes permettent de réaliser ce reflet à deux contours concentriques. Ces architectures n'utilisent pas de miroirs semi réfléchissants et confèrent ainsi une haute efficacité énergétique au dispositif, le bilan photométrique est ainsi multiplié par huit.

La précision de calcul est améliorée en utilisant d'une part la valeur connue de l'angle entre les directions du contour du diaphragme ou masque et d'autre part, la valeur connue de l'angle entre les directions du contour de l'écran. Le système selon l'invention n'utilisant qu'un seul capteur matriciel, le dispositif est donc plus compact et requiert une électronique plus simple qu'un système à deux capteurs.

Plus précisément, l'invention a pour objet un système de détection de la posture d'un objet mobile dans l'espace comprenant un dispositif fixe électro-optique d'orientation connue comprenant au moins une source d'émission, un capteur matriciel photosensible et au moins un coin de cube optique disposé sur l'objet mobile dont la face d'entrée a une géométrie prédéterminée, la lumière issue de la source et rétroréfléchie par le coin de cube formant un contour lumineux sur le capteur matriciel,

caractérisé en ce que le dispositif fixe électro-optique comporte un élément optique de forme et d'emplacement connus, disposé au voisinage de ladite source et agencé de façon à former une zone sombre dans la partie centrale du contour lumineux, le système de détection comprenant des moyens d'analyse agencés de façon à déterminer, à partir de la connaissance des points de fuite du contour lumineux et de la position et de la forme de la zone sombre la position et l'orientation de l'objet mobile.

Avantageusement, l'élément optique est un écran ponctuel ou un écran plan en forme de parallélogramme ou d'hexagone.

Avantageusement, l'élément optique est constitué de trois surfaces rectangulaires formant un trièdre trirectangle.

Avantageusement, l'élément optique est un miroir comprenant une surface réfléchissante comportant une épargne centrale.

Avantageusement, l'épargne centrale est en forme de trou ou de parallélogramme ou d'hexagone.

Avantageusement, le dispositif fixe électro-optique comporte un système optique permettant de former une image de la source sur l'élément optique.

Avantageusement, la face d'entrée du coin de cube comporte un masque délimitant une zone transparente en forme de triangle, de parallélogramme ou d'hexagone.

Avantageusement, le coin de cube étant composé de trois miroirs orthogonaux entre eux, chacun des miroirs comportant un masque délimitant une zone réfléchissante en forme de rectangle.

L'invention sera mieux comprise et d'autres avantages apparaîtront à la lecture de la description qui va suivre donnée à titre non limitatif et grâce aux figures annexées parmi lesquelles :

Les figures 1 et 2 précédemment décrites représentent des dispositifs fixes optoélectroniques selon l'art antérieur ;
Les figures 3, 4 et 5 illustrent les principes généraux du système de détection selon l'invention ;
Les figures 6, 7, 8 et 9 illustrent la détermination de la position de l'image de la source par réflexion sur le coin de cube ;
Les figures 10 à 14 représentent différentes formes de l'élément optique selon l'invention et les formes de zones sombres correspondantes ;
Les figures 15 à 21 représentent différents agencements du dispositif fixe électro-optique d'orientation selon l'invention.

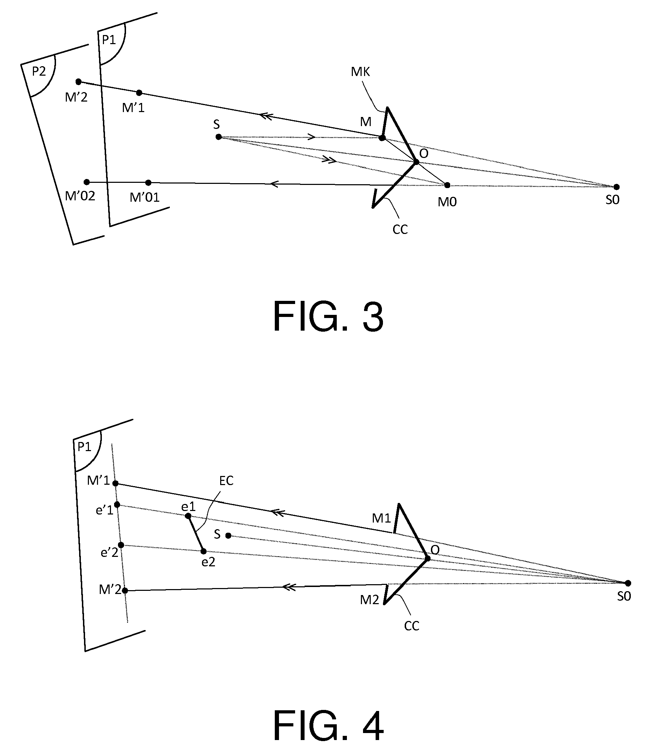

Comme il a été dit et représenté en figure 3, il existe, dans l'art antérieur, des systèmes de détection optique comportant un dispositif fixe électro-optique d'émission et d'acquisition comportant deux capteurs matriciels CM1 et CM2 et un coin de cube CC porté par l'objet mobile. Le coin de cube CC est équipé d'un masque MK de contour connu. Sur les deux plans P1 et P2 des deux capteurs CM1 et CM2, on recueille, pour chacun des points M du masque MK, deux couples de points images (M'1, M'01) et (M'2, M'02) obtenus par la projection de centre S0, symétrique du point source S par rapport au sommet O du coin de cube. L'orientation des côtés du contour du reflet sur chaque capteur donne, d'une part la position du point S0 et donc la position du sommet O inconnu et d'autre part l'orientation du masque.

Dans le dispositif selon l'invention, le dispositif fixe électro-optique ne comporte qu'un seul capteur qui ne recueille qu'un seul reflet du masque MK. Ce reflet est localement modulé par l'ombre d'un élément fixe. L'ensemble permet de déterminer la position du point S0 et l'orientation du masque. L'invention repose sur le constat suivant. Dans la section du faisceau lumineux réfléchi par le coin de cube, seule la partie périphérique du faisceau de réception, de dimension transversale environ double de celle du masque, fournit les informations intéressantes, c'est-à-dire la forme du contour projeté et le niveau d'éclairement le long du contour projeté.

Par conséquent, un élément occultant EC, placé comme indiqué sur la figure 4, à proximité de la source S, ne modifie :

- ni le flux d'émission vers le coin de cube ;
- ni la forme du contour du reflet projeté ;
- ni l'éclairement au voisinage du contour du reflet projeté.

Il génère une ombre projetée sur le plan P1 d'un unique capteur matriciel. Cette ombre est située en région centrale du reflet du masque et sa forme et sa position ne dépendent que de la position du centre de projection S0 qui est symétrique du point S par rapport au centre du coin de cube O. Ces informations sont suffisantes pour déterminer totalement la position et l'orientation du coin de cube.

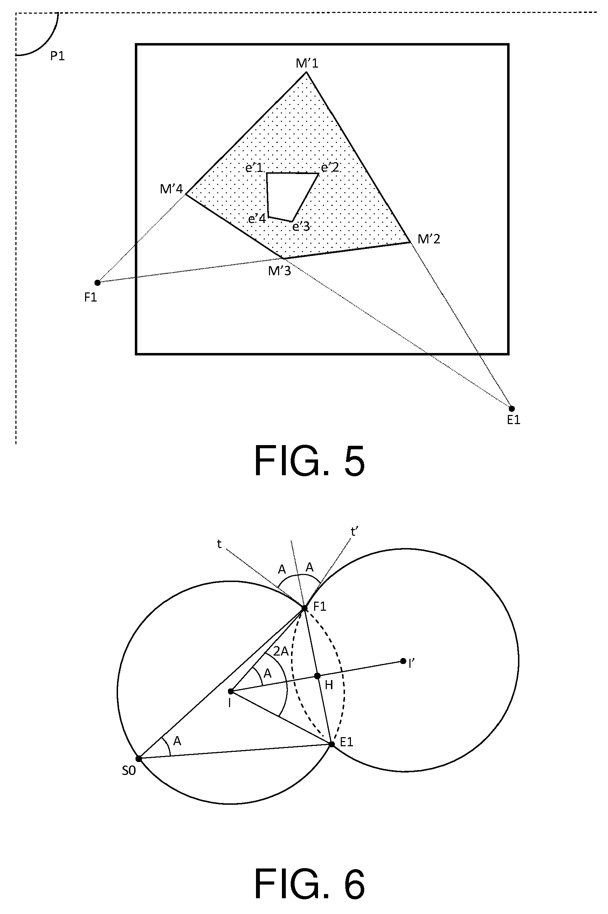

L'élément occultant peut prendre des formes diverses. A titre de premier exemple, l'écran fixe connu EC est un quadrilatère délimité par quatre points e1, e2, e3 et e4. Comme on le voit sur la figure 5, la source génère une ombre projetée de cet écran fixe sur le plan P1 du capteur. Cette ombre est délimitée par les quatre points e'1, e'2, e'3 et e'4. Elle est située en région centrale du reflet du masque. Sa forme et sa position ne dépendent que de la positon du centre de projection S0, symétrique de S par rapport à O.

L'ensemble du reflet produit sur le plan P1 du capteur CM1 est ainsi constitué d'une surface lumineuse, de contour M'1, M'2, M'3, M'4 en forme de quadrilatère qui correspond à l'image de la surface d'entrée du coin ce cube et d'une surface sombre, centrée approximativement sur la surface lumineuse et de contour e'1, e'2, e'3 et e'4 également en forme de quadrilatère.

Comme on le voit sur la figure 5, pour un masque M1, M2, M3 et M4 en parallélogramme, les points de concours E1 et F1 des côtés du quadrilatère M'1, M'2, M'3, M'4 projeté sur le plan P1, sont les deux points de fuite correspondants aux deux directions du contour du masque.

La position inconnue du centre de projection S0 est donnée par le point de concours des droites joignant chaque sommet e1, e2, e3 et e4 de position connue du contour de l'écran fixe aux sommets projetés de positions mesurées du contour de l'ombre e'1, e'2, e'3 et e'4 sur le plan P1 de l'unique capteur.

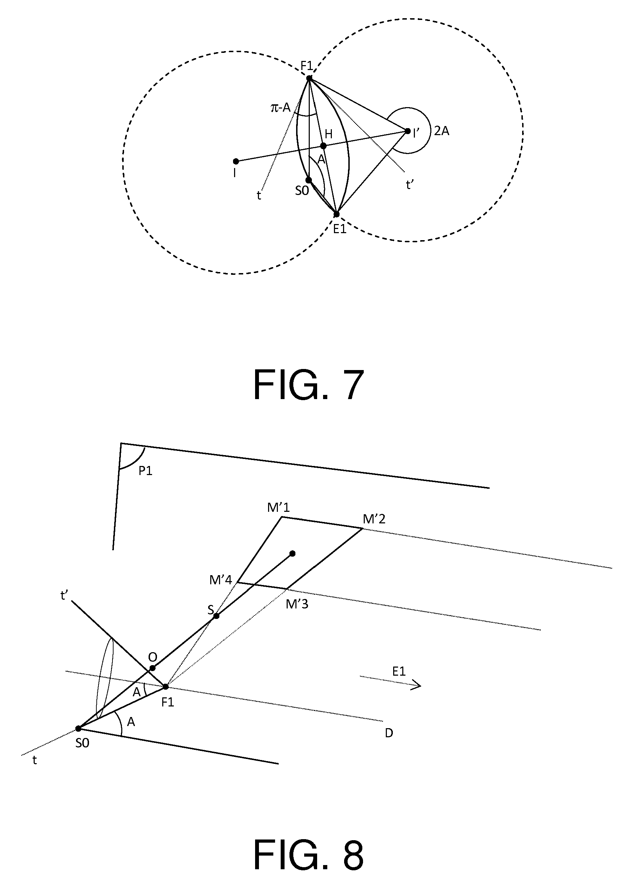

Il est possible d'améliorer la précision de mesure de la position du point S0 en utilisant la propriété suivante. S0 appartient à une surface courbe particulière représentée sur les figures 6 et 7. En effet, les deux côtés M1M2 et M1M4 du masque font entre eux un angle A connu par construction. Cet angle A est, par principe de la projection, égal à l'angle entre les deux directions déterminées par les segments S0E1 et S0F1. Le segment E1 F1 de centre H est donc vu de S0 sous un angle A constant. Par conséquent, dans tout plan contenant E1 F1, S0 appartient à la portion de cercle centré en I, point depuis lequel le segment E1 F1 est vu sous l'angle 2A, l'angle au centre étant égal au double de l'angle inscrit.

Dans l'espace, le point S0 est donc situé sur la surface de révolution engendrée par la rotation, autour de l'axe E1 F1, de l'arc de cercle E1 F1, portion du cercle de rayon r centré à une distance d sur une médiatrice de E1 F1. La distance d et le rayon r sont donnés par les formules suivantes :

$$d = IH = [(E1F1)/2] \,/\, |tgA| \quad \text{et} \quad r = IE1 = [(E1F1)/2] \,/\, sinA.$$

La figure 6 donne en trait gras la coupe de cette surface de révolution sur un plan quelconque contenant l'axe E1 F1, lorsque l'angle A est inférieur à 90°. Cette surface est un tore croisé, en forme de « citrouille ».

La figure 7 donne en trait gras la coupe de cette surface de révolution, lorsque l'angle A est supérieur à 90°. Cette surface est un ovoïde à points de rebroussement aux sommets E1 et F1.

Lorsque l'angle A vaut 90° correspondant à un masque rectangulaire, la surface est celle d'une sphère centrée en H et de rayon r=E1 F1/2.

Lorsqu'une des directions, par exemple la direction commune des côtés M1M2 et M3M4 du masque, est parallèle au plan de projection P1 du capteur matriciel, le quadrilatère projeté devient un trapèze dans lequel les côtés M'1M'2 et M'3M'4 sont parallèles à la direction D commune des côtés M1M2 et M3M4 du masque. Un des deux points de fuite, par exemple E1, est donc à l'infini dans une direction D comme représenté sur la figure 8. La direction du point de fuite E1 est représentée par une flèche sur cette figure. L'angle A, connu par construction, entre les deux côtés M1M2 et M1M4 du masque est l'angle entre la direction D et la direction inconnue S0F1. Le point S0 appartient alors au cône de sommet F1 d'axe D et d'angle A. Sur la figure 6, ce cône correspond au cône d'angle A et d'axe E1 F1 engendré par rotation autour de l'axe E1 F1 de la tangente F1-t au cercle de centre I ou de la tangente F1-t' au cercle de centre I'. Ce cône tangent au tore en F1 représente la forme dégénérée du tore quand la distance E1 F1 est infinie. Sur la figure 7, ce cône correspond au cône d'angle (π-A) et d'axe E1 F1, engendré par les tangentes F1-t ou F1-t'. Lorsque l'angle A vaut 90°, ce cône est le plan perpendiculaire à D passant par F1.

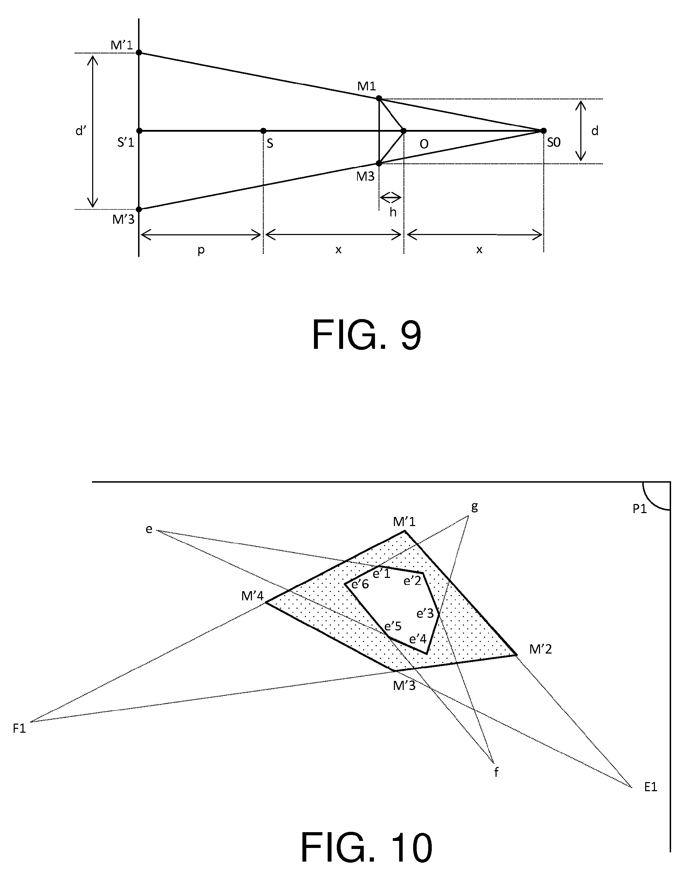

Lorsque le plan du masque est parallèle au plan P1 de projection, les deux points de fuite sont tous les deux à l'infini, le quadrilatère projeté devient un parallélogramme. On utilise alors deux autres données de construction pour déterminer le point S0 comme indiqué sur la figure 9. Ce sont, d'une part la distance h entre le sommet O du réflecteur et le plan du masque, et d'autre part la longueur d d'une des diagonales du masque par exemple M1-M3. La diagonale projetée M'1-M'3, parallèle à M1-M3 a pour longueur mesurée d'. Les diagonales projetées M'1-M'3 et M'2-M'4 sont concourantes en leur milieu qui est le point S'1, projection de S et de O. La position de la source S est connue, par conséquent la droite S'1-S et sa longueur p sont connues. La position recherchée de S0 sur la droite S'1-S est donnée par l'expression suivante, qui exprime que S et S0 sont symétriques par rapport à O :

$$(x+h)/d = (p+2x)/d'.$$

On en déduit, pour d' différent de 2d, x = p/[(d'/d)-2], L'abscisse de S0 sur l'axe S'1-S est donnée par la relation :

$$S'1\text{-}S0 = p + 2x$$

Le cas d'égal à 2d correspond à la situation où S est sur le plan P1, qui est une configuration de construction écartée par hypothèse.

L'orientation de chaque côté du masque MK du coin de cube est donnée, après détermination de S0, par l'orientation de chacune des deux droites (S0-E1) et (S0-F1).

Si l'écran EC est un parallélogramme e1, e2, e3 et e4, les points e et f, intersections des côtés du quadrilatère projeté e'1, e'2, e'3 et e'4 sont les deux points de fuite correspondant aux deux directions de l'écran EC dont l'angle « a » entre les deux directions des côtés est connu. Le segment e-f est vu sous l'angle « a » depuis le point S0, donc S0 appartient également à une surface de révolution définie. En outre, l'orientation absolue de chaque côté de l'écran EC est connue par rapport au plan P1 du capteur matriciel. Par conséquent, le point S0 recherché est situé à l'intersection des deux droites issues des deux points de fuite e et f, qui sont parallèles aux côtés correspondants du contour de l'écran EC.

Ces deux modes supplémentaires de localisation de S0 grâce aux deux points de fuite de l'écran EC contraint les directions du contour de l'écran EC fixe à ne pas être parallèles au plan P1 de projection.

Une amélioration de la précision de détermination de S0 peut être obtenue à l'aide d'un troisième point de fuite g grâce à un écran EC à contour hexagonal e1, e2, e3, e4, e5 et e6 constitué de six côtés coplanaires, parallèles deux à deux et non parallèles au plan P1 de projection. La figure 10 schématise sur P1 le contour obtenu de l'ombre e'1, e'2, e'3, e'4, e'5 et e'6 et celui du reflet lumineux M'1, M'2, M'3, M'4 pour un masque du réflecteur en parallélogramme.

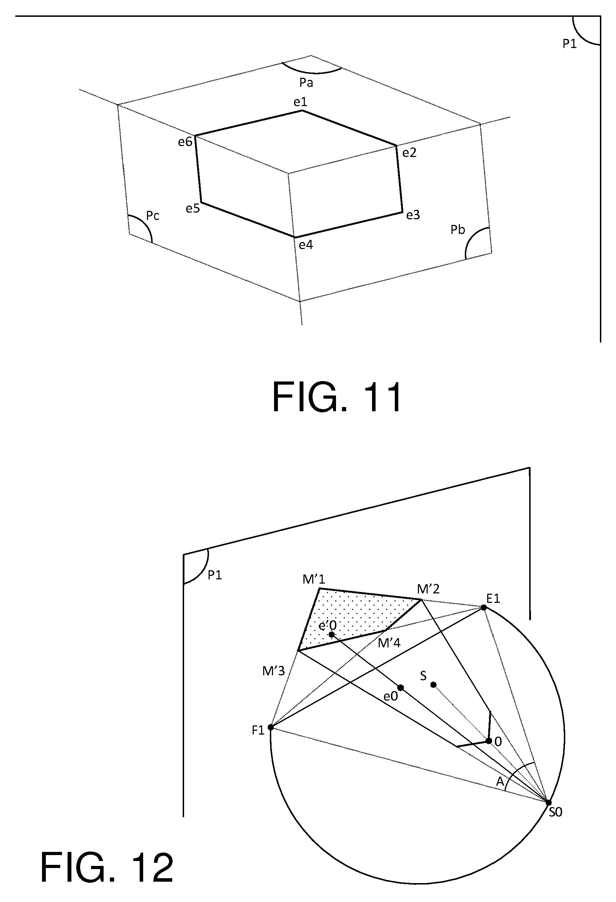

Ce contour hexagonal de l'écran EC à côté parallèles deux à deux peut également être réparti selon un dièdre constitué de deux plans non parallèles à P1. Comme représenté en figure 11, il peut également être réparti selon un trièdre constitué de trois plans Pa, Pb et Pc non parallèles à P1 et d'orientations mutuelles quelconques.

Les trois angles entre les trois plans du trièdre peuvent être choisis droits. On obtient alors un coin de parallélépipède. Tous les angles du contour hexagonal du masque EC sont alors droits, et le point S0 devient le point de concours de trois sphères dont les diamètres sont les trois côtés du triangle « efg » constitué par les trois points de fuite du contour e'1, e'2, e'3, e'4, e'5 et e'6 sur P1.

Les côtés du contour peuvent avoir la même longueur, l'écran EC occultant est alors un coin de cube.

A titre de second exemple, l'écran fixe connu est un écran « ponctuel », c'est-à-dire de petites dimensions devant, par exemple, les dimensions du masque du coin de cube. L'écran EC est réduit en un point unique e0 qui se projette en e'0 sur le plan P1 du capteur. La position de S0 est donc, comme représenté en figure 12, à l'intersection de la droite e0-e'0 et de la surface du tore d'axe E1 F1, depuis lequel le segment E1 F1 est vu sous l'angle A.

L'avantage d'un écran de petite dimension est qu'il évite l'occultation du contour du reflet lumineux lorsque celui-ci est aussi de petite taille, à savoir pour les grandes incidences d'éclairage sur le réflecteur, c'est-à-dire aux bords extrêmes du champ angulaire du réflecteur.

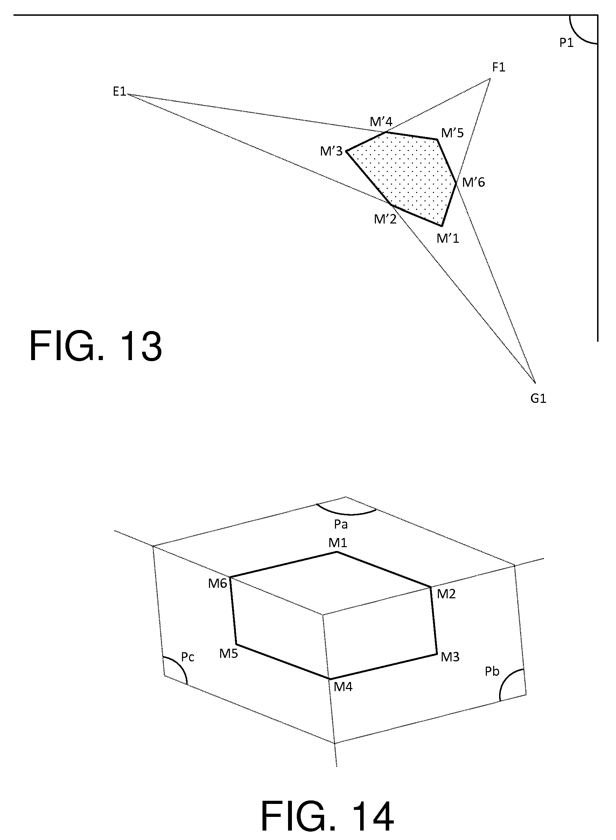

Le masque du coin de cube peut également être de forme triangulaire ou hexagonale. Dans le cas général où aucune des trois directions du contour n'est parallèle au plan P1 comme représenté en figure 13, les trois points de fuite E1, F1 et G1 du contour hexagonal résultant M'1, M'2, M'3, M'4, M'5 et M'6 produit sur le plan P1 et les angles connus entre les côtés du contour du masque définissent les trois tores d'axe E1 F1, F1 G1 et G1 E1, dont le point de concours commun est le point S0 recherché.

Si le masque a un contour hexagonal, les trois directions des côtés du contour hexagonal du masque peuvent être réparties selon un, deux ou trois plans. Dans le cas de la répartition en trièdre, les trois plans (Pa, Pb, Pc) représentés en figure 14 supportant les côtés du contour hexagonal peuvent être mutuellement orthogonaux. Ces trois plans peuvent être ceux des trois miroirs constituant le réflecteur en coin de cube et le contour du masque est alors constitué à partir de deux côtés du contour de chaque miroir. Tous les angles du contour hexagonal du masque sont alors droits, et le point S0 recherché devient le point de concours des trois sphères dont les diamètres sont les trois côtés du triangle E1 F1 G1 de la figure 12 constitué des trois points de fuite du contour hexagonal M'2, M'3, M'4, M'5 et M'6 sur P1.

Le surdimensionnement des données permettant de déterminer l'orientation et la position du coin de cube obtenu grâce à la présence et à la forme spécifique du contour de l'écran occultant EC permet d'augmenter notablement la précision en position et la précision en orientation.

Il existe différentes dispositions possibles permettant de réaliser le dispositif électro-optique selon l'invention comportant un élément optique permettant de réaliser l'obturation centrale dans le contour lumineux réfléchi par le coin de cube. Ce dispositif à occultation doit assurer les fonctions suivantes :

- transmettre le faisceau émis par la source ponctuelle en direction du coin de cube ;
- transmettre le faisceau réfléchi par le coin de cube vers le capteur photosensible en supprimant la partie centrale de la partie périphérique du faisceau.

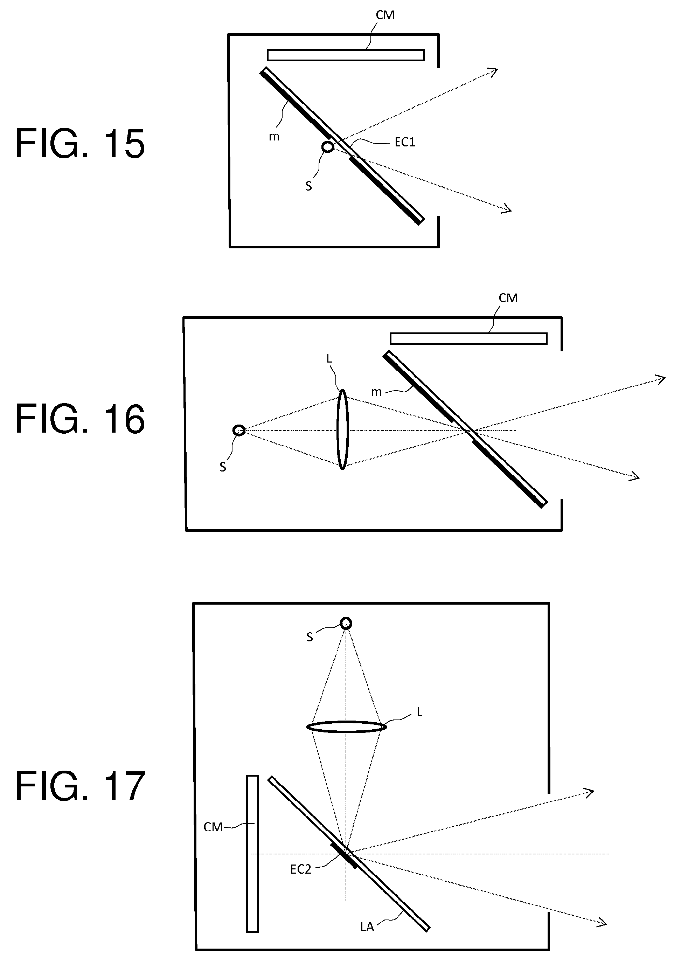

A titre d'exemples, différentes réalisations de dispositifs électro-optiques sont représentés sur les figures 15 à 21.

Une première réalisation est représentée sur les vues en coupe des figures 15 et 16. Le dispositif électro-optique comporte essentiellement une source ponctuelle S, un capteur matriciel CM et un miroir m comportant une ouverture centrale transparente EC1. Dans une première variante, la source est disposée derrière cette ouverture centrale. Le rayonnement émis par la source S passe à travers cette ouverture EC1 et est réfléchi par le coin de cube non représenté sur la figure 15. La partie périphérique du contour lumineux est réfléchi par le miroir m vers le capteur matriciel CM tandis que sa partie centrale est perdue. On obtient bien un contour lumineux à zone sombre. L'ouverture du miroir EC1 correspond donc à l'élément optique d'obturation. Il peut être réduit à un simple trou ou avoir une forme géométrique plus complexe comme on l'a vu. On peut ajouter un cache au niveau de la source S de façon que la source n'éclaire pas directement le capteur matriciel CM.

Dans une variante simple représentée en figure 16, on ajoute une optique de focalisation L qui forme de la source ponctuelle une image au centre du miroir. On contrôle ainsi l'angle d'émission de la source en modifiant la focale et l'ouverture de l'optique de focalisation. Cette dernière disposition permet d'utiliser des sources laser émettant des faisceaux de lumière parallèle focalisés par l'optique de focalisation L.

Dans une seconde variante représentée en figure 17, on peut utiliser une lame LA transparente comportant une partie centrale réfléchissante EC2. Cette lame est, par exemple, une lame de faible épaisseur à faces planes et parallèles. On obtient bien de la même façon un contour lumineux à zone sombre. La partie centrale réfléchissante correspond à l'élément optique d'obturation. Là encore, elle peut être ponctuelle ou de forme géométrique plus complexe.

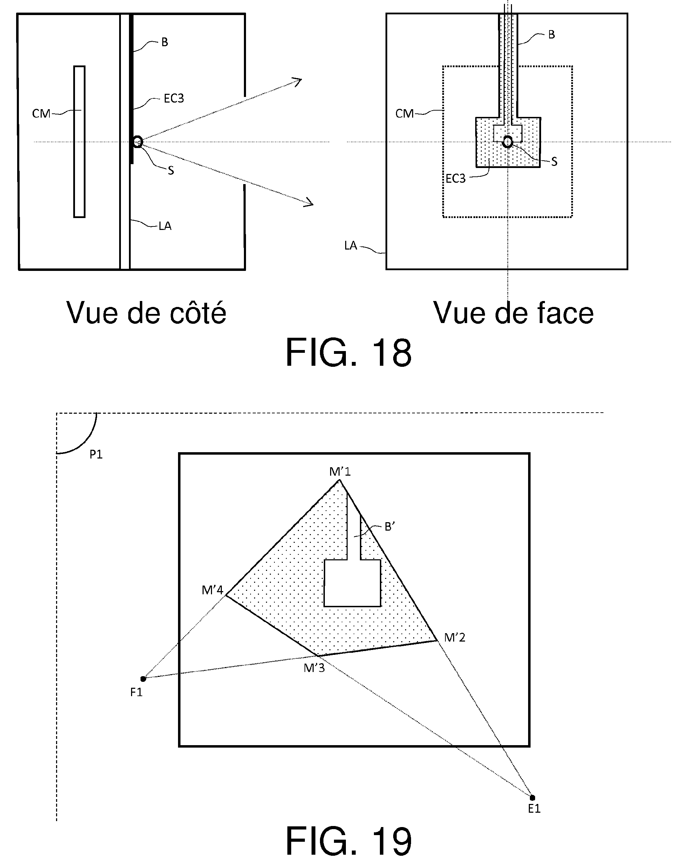

Une seconde réalisation du dispositif électro-optique selon l'invention est représentée en figure 18. Cette figure 18 comporte une vue de côté et une vue de face du dispositif. Dans ce cas, le dispositif électro-optique comporte essentiellement une source ponctuelle S, un capteur matriciel CM et une lame transparente LA comportant un écran central opaque EC3. La source ponctuelle S est fixée au voisinage du centre de l'écran central opaque. L'écran central EC3 comporte un prolongement en forme de barrette B permettant de masquer le câblage de la source ponctuelle. Là encore, on obtient bien un contour lumineux à zone sombre sur le capteur CM comme on le voit sur la figure 19 qui représente l'image obtenue sur le capteur matriciel. Dans le cas des figures 18 et 19, l'écran central a une forme rectangulaire. L'image de la barrette B' est facilement identifiable et ne perturbe en rien l'identification des côtés du cache.

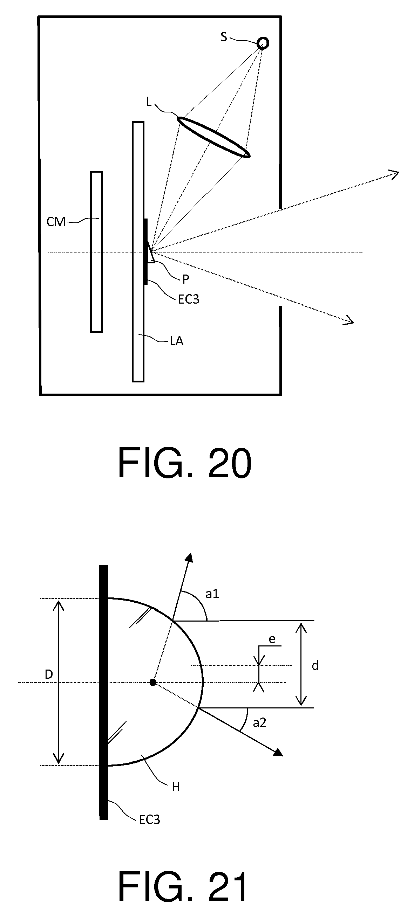

Dans une variante de réalisation représentée en figure 20, on ajoute une optique de focalisation L qui forme de la source ponctuelle S une image au centre de l'écran central opaque. L'écran central comporte un élément optique P permettant de réfléchir le rayonnement de la source dans la direction souhaitée. On contrôle ainsi l'angle d'émission de la source. Cet élément optique peut être un petit miroir prismatique. Il peut également s'agir d'un miroir hémisphérique H de courte focale comme on le voit sur la figure 21. La source S est alors un faisceau laser incident.

La position et le diamètre du miroir H sont choisis pour assurer la déviation « a » et la divergence « da » requises du faisceau éclairant le réflecteur en coin de cube. Comme représenté en figure 21, pour un excentrement e du faisceau dans un plan équatorial entre le centre du miroir hémisphérique H de diamètre D et l'axe du faisceau incident de diamètre d, la déviation centrale « a » la divergence « da » du faisceau sont données par :

$$\tan a \approx e/(D/4), \text{ soit } a \approx 4e/D \text{ et } ;$$

$$da = a1 + a2 \approx 4d/D.$$

Le rayonnement de la source ponctuelle S est indifféremment à bande spectrale étroite, à bande large ou multi raies, dans ou hors de la bande visible.

Le capteur matriciel est indifféremment équipé de filtres colorés de type mosaïque ou exempt desdits filtres colorés.

**Revendications**

1. Système de détection de la posture d'un objet mobile dans l'espace comprenant un dispositif fixe électro-optique (DEO) d'orientation connue comprenant au moins une source d'émission (S), un capteur matriciel photosensible (CM) et au moins un coin de cube optique (CC) à masque disposé sur l'objet mobile dont la face d'entrée du masque a une géométrie prédéterminée, la lumière issue de la source et rétroréfléchie par le coin de cube formant un contour lumineux (M'1, M'2, M'3, M'4) correspondant au reflet du masque sur le capteur matriciel, **caractérisé en ce que** le dispositif fixe électro-optique comporte un élément optique (EC) occultant de forme et d'emplacement connus, disposé au voisinage de ladite source (S) et agencé de façon à former une zone sombre (e'1, e'2, e'3, e'4) dans la partie centrale du contour lumineux, le système de détection comprenant des moyens d'analyse agencés de façon à déterminer, à partir de la connaissance des points de fuite (E1, F1) du contour lumineux et de la position et de la forme de la zone sombre la position et l'orientation de l'objet mobile.

2. Système de détection selon la revendication 1, **caractérisé en ce que** l'élément optique (EC) est un écran ponctuel.

3. Système de détection selon la revendication 1, **caractérisé en ce que** l'élément optique (EC) est un écran plan en forme de parallélogramme ou d'hexagone.

4. Système de détection selon la revendication 1, **caractérisé en ce que** l'élément optique (EC) est constitué de trois surfaces rectangulaires formant un trièdre trirectangle.

5. Système de détection selon la revendication 1, **caractérisé en ce que** l'élément optique (EC) est un miroir (m) comprenant une surface réfléchissante comportant une épargne centrale (EC1).

6. Système de détection selon la revendication 5, **caractérisé en ce que** l'épargne centrale (EC1) est en forme de trou ou de parallélogramme ou d'hexagone.

7. Système de détection selon l'une des revendications précédentes, **caractérisé en ce que** le dispositif fixe électro-optique comporte un système optique (L) permettant de former une image de la source sur l'élément optique.

8. Système de détection selon l'une des revendications précédentes, **caractérisé en ce que** la face d'entrée du coin de cube comporte un masque (MK) délimitant une zone transparente en forme de triangle, de parallélogramme ou d'hexagone.

9. Système de détection selon l'une des revendications 1 à 7, **caractérisé en ce que** le coin de cube étant composé de trois miroirs orthogonaux entre eux, chacun des miroirs comportant un masque délimitant une zone réfléchissante en forme de rectangle.

**Patentansprüche**

1. System zum Erkennen der Lage eines mobilen Objekts im Raum, das Folgendes umfasst: eine feste elektrooptische Vorrichtung (DEO) mit einer bekannten Orientierung, die wenigstens eine Sendequelle (S), einen fotoempfindlichen Matrixsensor (CM) und wenigstens eine optische Würfelecke (CC) mit einer auf dem mobilen Objekt angeordneten Maske umfasst, wobei die Eintrittsfläche der Maske eine vorbestimmte Geometrie hat, wobei das von der Quelle kommende und von der Würfelecke retroreflektierte Licht eine Lichtkontur (M'1, M'2, M'3, M'4) bildet, die der Reflexion der Maske auf dem Matrixsensor entspricht, **dadurch gekennzeichnet, dass** die feste elektrooptische Vorrichtung ein verdeckendes optisches Element (EC) mit einer/m bekannten Form und Ort umfasst, das sich in der Nähe der Quelle (S) befindet und so ausgelegt ist, dass es eine dunkle Zone (e'1, e'2, e'3, e'4) im mittleren Teil der Lichtkontur bildet, wobei das Erkennungssystem Analysemittel umfasst, die so ausgelegt sind, dass sie auf der Basis der Kenntnis der Fluchtpunkte (E1, F1) der Lichtkontur und der Position und der Form der dunklen Zone die Position und Orientierung des mobilen Objekts bestimmen.

2. Erkennungssystem nach Anspruch 1, **dadurch gekennzeichnet, dass** das optische Element (EC) ein punktueller Bildschirm ist.

3. Erkennungssystem nach Anspruch 1, **dadurch gekennzeichnet, dass** das optische Element (EC) ein Flachbildschirm in Form eines Parallelogramms oder Hexagons ist.

4. Erkennungssystem nach Anspruch 1, **dadurch gekennzeichnet, dass** das optische Element (EC) aus drei rechteckigen Flächen zusammengesetzt ist, die ein Würfeleckenelement bilden.

5. Erkennungssystem nach Anspruch 1, **dadurch gekennzeichnet, dass** das optische Element (EC) ein Spiegel (m) ist, der eine reflektierende Fläche umfasst, die eine zentrale Aussparung (EC1) aufweist.

6. Erkennungssystem nach Anspruch 5, **dadurch gekennzeichnet, dass** die zentrale Aussparung (EC1) in Form eines Lochs oder Parallelogramms oder Hexagons vorliegt.

7. Erkennungssystem nach einem der vorherigen Ansprüche, **dadurch gekennzeichnet, dass** die feste elektrooptische Vorrichtung ein optisches System (L) umfasst, das die Bildung eines Bildes der Quelle auf dem optischen Element zulässt.

8. Erkennungssystem nach einem der vorherigen Ansprüche, **dadurch gekennzeichnet, dass** die Eintrittsfläche der Würfelecke eine Maske (MK) umfasst, die eine transparente Zone in Form eines Dreiecks, Parallelogramms oder Hexagons begrenzt.

9. Erkennungssystem nach einem der Ansprüche 1 bis 7, **dadurch gekennzeichnet, dass**, da die Würfelecke aus drei zueinander orthogonalen Spiegeln besteht, jeder der Spiegel eine Maske umfasst, die eine reflektierende Zone in Rechteckform begrenzt.

**Claims**

1. A system for detecting the posture of a mobile object in space, comprising a fixed electro-optical device (DEO) with a known orientation comprising at least one transmission source (S), one photosensitive matrix sensor (CM) and at least one optical corner cube (CC) with a mask disposed on said mobile object, the entry face of said mask having a predetermined geometry, the light coming from said source and reflected back by said corner cube forming a luminous profile (M'1, M'2, M'3, M'4) that corresponds to the reflection of the mask on said matrix sensor, **characterised in that** said fixed electro-optical device comprises an occulting optical element (EC) with a known shape and location that is disposed in the vicinity of said source (S) and is arranged so as to form a dark zone (e'1, e'2, e'3, e'4) in the central part of said luminous profile, said detection system comprising analysis means that are arranged so as to determine, on the basis of the knowledge of the vanishing points (E1, F1) of said luminous profile and of the position and the shape of said dark zone, the position and the orientation of said mobile object.

2. The detection system according to claim 1, **characterised in that** said optical element (EC) is a point screen.

3. The detection system according to claim 1, **characterised in that** said optical element (EC) is a flat screen in the form of a parallelogram or a hexagon.

4. The detection system according to claim 1, **characterised in that** said optical element (EC) is made up of three rectangular surfaces forming a trirectangle trihedron.

5. The detection system according to claim 1, **characterised in that** said optical element (EC) is a mirror (m) comprising a reflective surface comprising a central opening (EC1).

6. The detection system according to claim 5, **characterised in that** said central opening (EC1) is in the form of a hole or a parallelogram or a hexagon.

7. The detection system according to any one of the preceding claims, **characterised in that** said fixed electro-optical device comprises an optical system (L) allowing an image of said source to be formed on said optical element.

8. The detection system according to any one of the preceding claims, **characterised in that** said entry face of said corner cube comprises a mask (MK) demarcating a transparent zone in the form of a triangle, a parallelogram or a hexagon.

9. The detection system according to any one of claims 1 to 7, **characterised in that**, with said corner cube being made up of three mirrors that are orthogonal to each other, each of said mirrors comprises a mask demarcating a reflective zone in the form of a rectangle.

# FIG. 1

# FIG. 2

FIG. 3

FIG. 4

FIG. 5

FIG. 6

FIG. 7

FIG. 8

EP 2 811 319 B1

# FIG. 9

# FIG. 10

14

# FIG. 11

# FIG. 12

FIG. 13

FIG. 14

EP 2 811 319 B1

FIG. 15

FIG. 16

FIG. 17

17

Vue de côté　　　　　Vue de face

# FIG. 18

# FIG. 19

FIG. 20

FIG. 21

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2554941 A